# EUROPEAN PATENT APPLICATION

(11) **EP 3 001 426 A1**
(43) Date of publication of application: **30.03.2016**
(21) Application number: 14186178.1
(22) Date of filing: 24.09.2014
(51) Int. Cl.: G21C 3/322, G21C 3/33

(54) **Fuel assembly for boiling water reactor**

(71) Applicant: Westinghouse Electric Sweden AB, 721 63 Västerås (SE)
(72) Inventor: Helmersson, Sture, 730 40 Kolbäck (SE); Månnson, Markus, 723 42 Västerås (SE); Söderlund, Anders, 735 91 Surahammar (SE)
(74) Representative: Berglund, Stefan

(57) **Abstract**

A fuel assembly for a boiling water reactor, comprises fuel rods (2), a tie plate (3), a handle device (4), and at least two water rods (7) attached to the tie plate and to the handle device. A plurality of spacers (8a, 8b), define first passages (8') for some of the fuel rods, and second passages (8") for the water rods. Each water rod comprises a tube part (7a) attached to the tie plate, and a solid part (7b) attached to the handle device. The tube part permits a flow of coolant. The spacers comprise primary spacers (8a) and a secondary spacer (8b). The primary spacers are attached to the tube parts. The tie plate, the water rods, the primary spacers and the handle device form a support structure carrying the weight of the fuel rods. The secondary spacer is positioned at the solid part of the respective water rod.

## Description

### TECHNICAL FIELD OF THE INVENTION

The present invention refers generally to a nuclear fuel assembly configured to be used in boiling water reactors, BWR. More precisely, the present invention refers a fuel assembly according to the preamble of claim 1.

### BACKGROUND AND PRIOR ART

The mechanical strength of the fuel assembly is an important factor to be considered when designing new fuel assemblies. A fuel assembly, which may comprise at least some fuel rods being full length rods and some part length rods, has to offer a proper support to all the fuel rods and protect them from mechanical forces during operation of the reactor, including seismic forces and fatique forces, and during handling of the fuel assembly.

US 5,646,973 shows a fuel assembly for a boiling water reactor. The fuel assembly comprises two water rods attached to a lower tie plate and to an upper handle bar assembly. A plurality of spacers are attached to the water rods. Fuel rods are attached to the lower tie plate and extend through passages of the spacers.

US 5,610,961 shows another fuel assembly for a boiling water reactor. The fuel assembly comprises two water rods attached to a lower tie plate and to an upper tie plate. A plurality of spacers are attached to the water rods. Fuel rods are attached to the lower tie plate and to the upper tie plate and extend through passages of the spacers.

US 5,727,040 shows another fuel assembly for a boiling water reactor. The fuel assembly comprises one water rod attached to a lower tie plate and to an upper cover plate attached to a head piece comprising a handle. A plurality of spacers are attached to the water rod. Fuel rods are attached to the lower tie plate. Each fuel rod has an upper end cap extending into the upper cover plate.

### SUMMARY OF THE INVENTION

The object of the present invention is to provide a fuel assembly having a new structure offering a reliable support and protection for the nuclear fuel and the fuel rods during handling and operation.

This object is achieved by the fuel assembly initially defined, which is characterized in that the secondary spacer is positioned at the solid part of the respective water rod.

The secondary spacer, or one of possibly more secondary spacers, will form an uppermost spacer provided most closely to the second end of the fuel assembly.

The secondary spacer offers an improved and reliable support for at least some of the fuel rods at their upper ends close to the second end of the fuel assembly, especially for full length fuel rods.

According to an embodiment of the invention, each water rod is configured to carry the weight of the tie plate, the spacers, the fuel rods and the remaining water rods via the handle.

Redundancy is created since there are at least two water rods. If one water rod is broken the other water rod is configured to carry the weight of the fuel rods.

According to a further embodiment of the invention, the fuel assembly comprises three such water rods, wherein each of them is configured to carry the whole weight of the tie plate, the spacers, the fuel rods and the remaining water rods via the handle.

According to a further embodiment of the invention, the tube part of each water rod is configured to convey non-boiling coolant from the first lower end to the upper tube end.

Moreover, the tube part of each water rod may be cylindrical, preferably circular-cylindrical.

According to a further embodiment of the invention, the at least some of the fuel rods extend through the secondary spacer so that the upper end of the at least some of the fuel rods is located above and at a distance from the secondary spacer and below and at a distance from the handle device. The secondary spacer thus offers support to the at least some fuel rods close to the upper end of the fuel rods.

Advantageously, the fuel rods may comprise full length fuel rods and part length fuel rods, wherein the at least some fuel rods constitute the full length fuel rods.

Furthermore, the full length fuel rods may extend through a respective first passage of the secondary spacer a distance above the secondary spacer. Said distance may be less than 15 cm, preferably between 1 and 15 cm, more preferably between 2 and 10 cm, for instance approximately 5 cm.

According to a further embodiment of the invention, each fuel rod comprises a cladding tube enclosing the fuel and a plenum at the upper end above the fuel, wherein the fuel of the at least some fuel rods extends from the lower end to an upper fuel end which lies at the level of the upper tube end.

Non-boiling coolant, i.e. water in liquid phase, is thus flowing along the whole axial length of the fuel in the fuel rods, which ensures a proper moderation.

According to a further embodiment of the invention, the secondary spacer is axially movable in relation to the solid part of the respective water rod.

Advantageously, the secondary spacer may be supported by the outer casing, and especially may rest against the inner side of the outer casing.

According to a further embodiment of the invention, a security member is provided to prevent the secondary spacer from moving axially beyond the upper end of the at least some of the fuel rods. Advantageously, the security member may comprise one or two projections extending outwardly from the solid part of the water tube. The projection or projections may for instance be formed through machining of the solid part, by leaving material at a position above the position intended for the secondary spacer. The projections may also be formed by a transversal pin extending transversely through the solid part of the water tube. Alternatively, the security member may comprise a longitudinal pin attached to and extending downwardly from the handle device. According to a further embodiment, the secondary spacer may be prevented from moving by beads welded to at least some of the fuel rods or by oversize upper end caps of the fuel rod.

According to a further embodiment of the invention, the secondary spacer is attached to the solid part of the water rods.

According to a further embodiment of the invention, each of the water rods has an overall outer cross-sectional area, which is smaller, or significantly smaller, at the solid part than at the tube part. Such a smaller cross-sectional area at the solid part is advantageous since it contributes to a large flow area for the steam phase of the coolant outside the solid part in an upper region of the fuel assembly. The pressure drop in the upper region may thus be reduced.

According to a further embodiment of the invention, the first passages of the spacers engage a respective one of the fuel rods by frictional force, thereby permitting the fuel rods to move axially in the fuel assembly when the frictional force is exceeded.

Each fuel rod is thus held by friction, only, in at least some of the spacers. If the frictional force is exceeded, each fuel rod is thus permitted to slide axially, and individually, in relation to the water rods, the handle device and the tie plate.

Furthermore, axial growth of the fuel rods may be permitted. Each fuel rod is also permitted to grow independently of the other fuel rods of the fuel assembly.

According to further embodiment of the invention, the tie plate forms a stop member for the fuel rods in an axial direction, by permitting the fuel rods to rest against an upper support surface of the tie plate.

The lower end of the fuel rods may thus be positioned at a distance from the tie plate, wherein the tie plate may ensure that the fuel rods do not fall out of the fuel assembly.

Consequently, the fuel rods extend through a lowermost one of the primary spacers, so that the lower free end of the fuel rods is located below and at a distance from the lowermost primary spacer and above or on the support surface of the tie plate.

Advantageously, the outer cross-sectional area of each water rod at the tube part corresponds the cross-sectional area occupied by four of the fuel rods. Such a size of the water rods will secure a sufficient quantity of non-boiling coolant in the water rods.

According to a further embodiment of the invention, the solid part extends through a respective receiving opening of a carrying plate of the handle device and is attached to the carrying plate by means of an attachment mechanism provided above the secondary spacer.

According to a further embodiment of the invention, the attachment mechanism comprises an upper attachment member above, or substantially above, the carrying plate and a lower attachment member below, or substantially below, the carrying plate. Advantageously, the lower attachment member may be provided above the upper end of the fuel rods, especially at a significant distance from the upper end of the fuel rods. Thus, the influence of the attachment mechanism on the coolant flow and the pressure drop will be minimized.

Furthermore, the attachment mechanism may comprise a spring provided between the lower attachment member and the carrying plate to permit the solid part to move axially in relation to the handle device. Such a movement may absorb any possible difference in axial growth between the water rods.

According to a further embodiment of the invention, the fuel assembly comprises a transition piece provided beneath the tie plate.

Advantageously, the transition piece may form an inlet for the coolant to the fuel assembly. Furthermore, the transition piece may comprise a debris filter for capturing possible debris in the coolant.

According to a further embodiment of the invention, the transition piece is attached to the outer casing, wherein the support structure rests on the transition piece and is permitted to be lifted out of the outer casing via the handle. The transition piece may be attached to the outer casing by means of countersink screws extending radially through the outer casing into the transition piece.

According to a further embodiment of the invention, the outer casing comprises grip apertures provided at the second upper end outside the handle. Such grip apertures may be gripped by means of a gripping tool, which may be configured to grip simultaneously the handle, wherein the fuel assembly may be lifted via the handle and/or the grip apertures. This solution is sometimes referred to as the "shopping-bag" principle.

According to a further embodiment of the invention, the transition piece is attached to the tie plate, wherein the handle device comprises a support surface on which the outer casing is hanging to permit lifting of the support structure and the casing via the handle. The transition piece may be attached to the tie plate by means of axial screws extending axially through the transition piece into the tie plate. In this case, the fuel assembly, including the support structure, the fuel rods and the casing, may be lifted via the handle. This solution is sometimes referred to as the "channel-over-top" principle.

According to a further embodiment of the invention, the tube part of each water rod has an inlet having a first flow area and an outlet having a second flow area, wherein the inlet is located at the first lower end and the outlet is located at the upper tube end, and wherein the second flow area is larger than the first flow area. Non-boiling coolant may thus be conveyed all the way through the tube part of each water rod.

The inlet may comprise one, or possibly more, axial openings through a lower end surface of the water rod, or one or more side openings through the tube part at the lower end.

The outlet may comprise one or more side openings through the tube part. Advantageously, the side openings are provided at an upper region of the tube part.

### BRIEF DESCRIPTION OF THE DRAWINGS

The present invention is now to be explained more closely through a description of various embodiments and with reference to the drawings attached hereto.
- Fig 1: discloses a longitudinal section of a fuel assembly for a boiling water reactor according to a first embodiment of the invention.
- Fig 2: discloses a cross-section through the fuel assembly along the line II-II in Fig 1.
- Fig 3: discloses a longitudinal section through a part of a water rod and an adjacent fuel rod along the line III-III in Fig 1.
- Fig 4: discloses a plan view of a spacer of the fuel assembly in Fig 1.
- Fig 5: discloses a plan view of another spacer of the fuel assembly in Fig 1.
- Fig 6: shows a longitudinal section of a fuel assembly for a boiling water reactor according to a second embodiment of the invention.

### DETAILED DESCRIPTION OF VARIOUS EMBODIMENTS

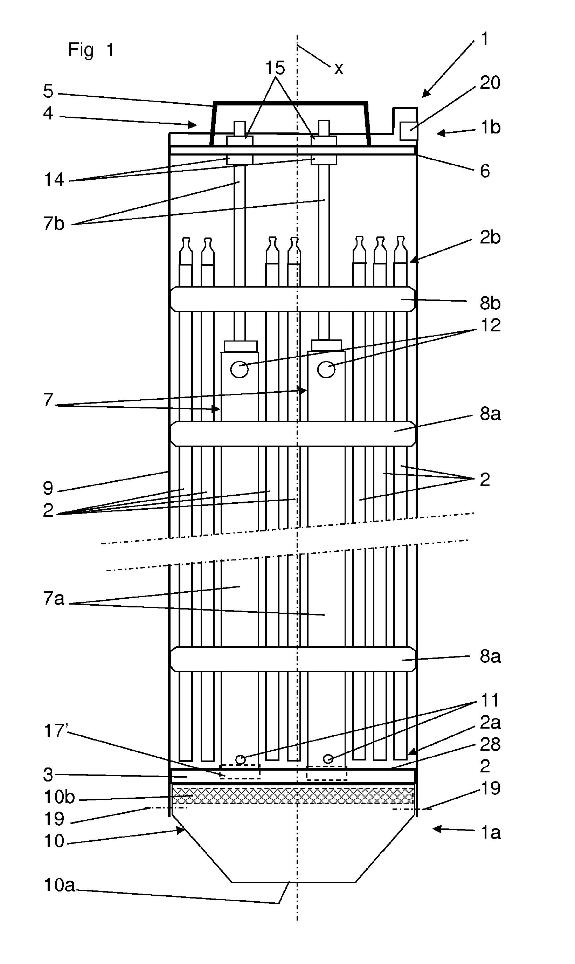

Fig 1 discloses a first embodiment of a fuel assembly 1 for a boiling water reactor, BWR, of a nuclear plant. The fuel assembly 1 has an elongated shape with a first lower end 1a and a second upper end 1b. The fuel assembly 1 defines a longitudinal axis x extending through the first lower end 1a and the second upper end 1b. The length of the fuel assembly 1 between the first lower end 1 a and the second upper end 1 b is approximately 4 m.

The words "lower" and "upper" refer to how the fuel assembly 1 is used in the boiling water reactor. The fuel assembly 1 extends vertically in the core of the boiling water reactor.

The fuel assembly 1 comprises elongated fuel rods 2 each having a lower end 2a and an upper end 2b. Each fuel rod 2 extends in parallel with the longitudinal axis x. Each fuel rod 2 encloses nuclear fuel, see below.

The fuel assembly 1 also comprises a tie plate 3 provided at the first lower end 1 a and a handle device 4 provided at the second upper end 1 b.

The handle device 4 comprises a handle 5 and a carrying plate 6. The handle 5 extends upwardly from the carrying plate 6.

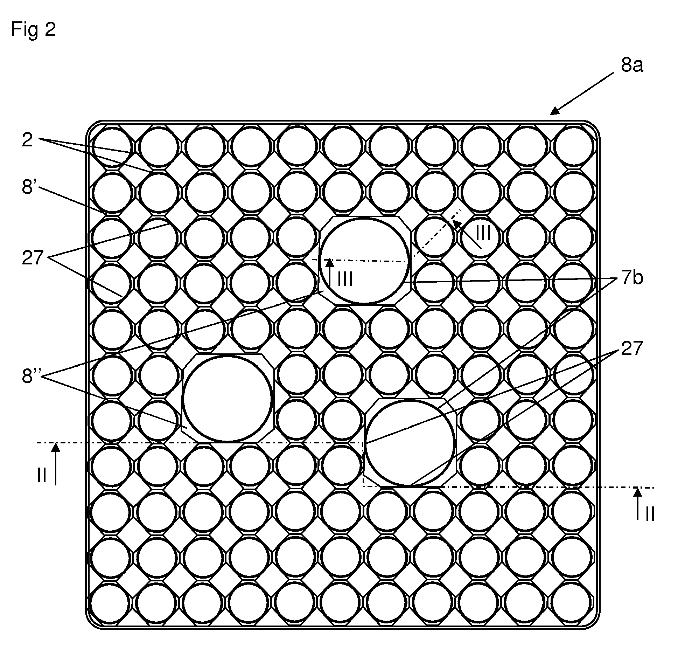

In the first embodiment, three water rods 7, see Fig 2, are provided and extend in parallel with the longitudinal axis x. Each water rod 7 is attached to the tie plate 3 and to the carrying plate 6 of the handle device 4.

The number of water rods 7 could alternatively be two or more than three, for instance, four, five or six.

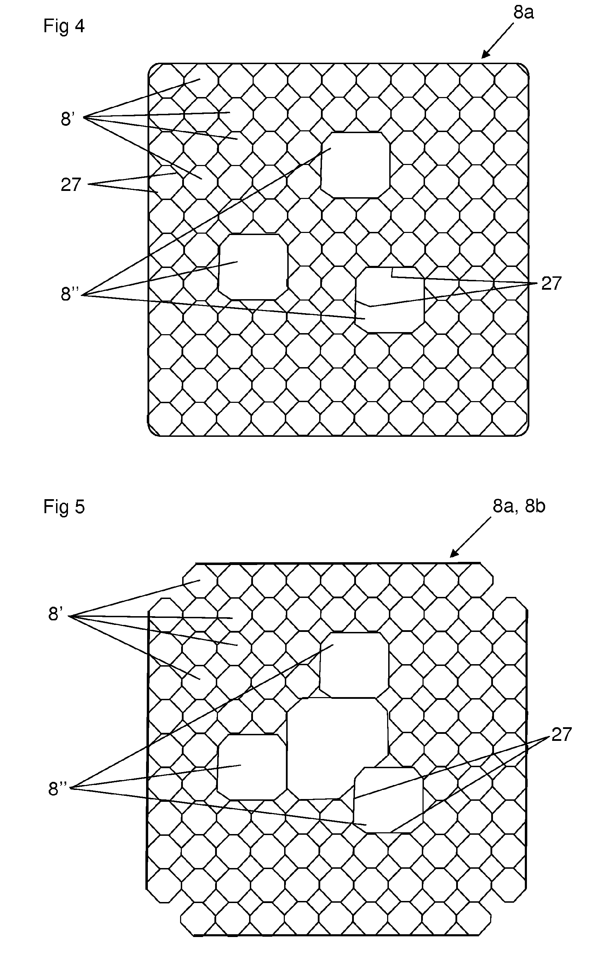

The fuel assembly comprises a plurality of spacers 8a, 8b, see especially Figs 4 and 5. The spacers 8a, 8b define first passages 8' through which at least some of the fuel rods 2 extend, and second passages 8" through which the water rods 7 extend. The spacers 8a, 8b may be equidistantly distributed along the length of the fuel rods 2.

In the first embodiment, the fuel assembly 1 comprises ten spacers 8a, 8b, which are arranged at ten levels comprising a lowermost level closest to the first lower end 1a and an uppermost level closest to the second upper end 1b. It should be noted that another number of spacers 8a, 8b is possible, for instance nine or eleven spacers 8a, 8b.

Each spacer 8a, 8b defines a number of fuel rod positions. In the first embodiment, each spacer 8a, 8b defines 11 x 11 fuel rod positions. In the spacers 8a disclosed in Fig 4, 12 fuel rod positions form three second passages 8" occupied by the water rods 7.

The remaining fuel rod positions form first passages 8' receiving a respective fuel rod, i.e. 109 fuel rods. The spacers 8a, 8b have been adapted to part length fuel rods, see below,

The fuel assembly 1 also comprises an outer casing 9 and a transition piece 10 provided at the first lower end 1a of the fuel assembly 1. The transition piece 10 forms an inlet 10a for the coolant to the fuel assembly 1. Furthermore, the transition piece 10 comprises a debris filter 10b for capturing possible debris in the coolant entering the fuel assembly 1 via the inlet 10a.

Each water rod 7 comprises a tube part 7a attached to the tie plate 3 and extending to an upper tube end. The tube part 7a of each water rod 7 has an inlet 11 having a first flow area and an outlet 12 having a second flow area. The inlet 11 is located at the first lower end 1 a and the outlet 12 is located at the upper tube end. The second flow area is larger than the first flow area. As mentioned above, it follows that the outer cross-sectional area A of each water rod at the tube part 7a corresponds the cross-sectional area A occupied by four of the fuel rods 2.

The inlet 11 may comprise or be formed by one, or possibly more, axial openings through a lower end surface of the water rod 7. In the embodiments disclosed, the inlet 11 is formed by one or more side openings through the tube part 7a at the lower end 1 a.

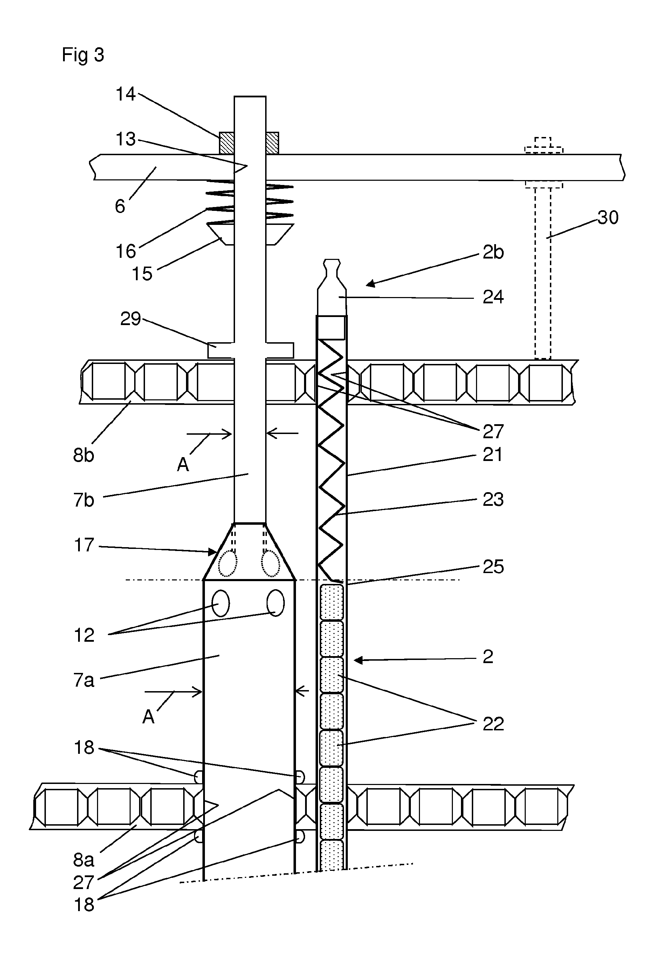

The outlet 12 comprises one or more side openings through the tube part 7. The side openings of the outlet 12 are provided at an upper region of the tube part 7a, see Fig 3.

Non-boiling coolant may thus be conveyed all the way through the tube part 7a of each water rod from the inlet 11 to the outlet 12 at the upper tube end.

Each water rod 7 also comprises a solid part 7b extending from the upper tube end and being attached to the handle device 4. The solid part 7b may be cylindrical, preferably circular cylindrical.

The solid part 7b may be formed of a massive rod, for instance of stainless steel, or any other suitable material.

Each of the water rods 7 has an overall outer cross-sectional area A, which is smaller, or significantly smaller, at the solid part 7b than at the tube part 7a, see Fig 3. The smaller cross-sectional area A at the solid part 7b contributes to a large flow area for the steam phase of the coolant outside the solid part 7b in the upper region of the fuel assembly 1.

The cross-sectional area A at the solid part 7b is preferably selected to have the same stress margin at lifting as tube part 7a. For instance, the cross-sectional area A at the solid part 7b may be in the order of the cross-sectional area of the fuel rods 2, or the cross-sectional area A at the solid part 7b may correspond to a diameter at the solid part 7b of 9 to 13 mm, for instance 10 to 12 mm.

The solid part 7b of each water rod 7 extends through a respective receiving opening 13 of a carrying plate 6 of the handle device 4 and is attached to the carrying plate 6 by means of an attachment mechanism provided above the secondary spacer 8b, see Fig 4. The attachment mechanism comprises an upper attachment member 14 above the carrying plate 6 and a lower attachment member 15 below the carrying plate 6. The lower attachment member 15 is provided at a distance from and above the upper end of the fuel rods 2.

In the first embodiment, the lower attachment member 15 is fixed to the solid part 7b of the water rod 7. The lower attachment member 15 could be an integrated part of the solid part 7b, as indicated in Fig 3, or be attached to the solid part 7b by for instance a thread connection, welding etc..

The upper attachment 14 is in the first embodiment threaded directly onto the solid part 7b. Alternatively, the lower attachment member 15 or the upper attachment member could comprise a sleeve extending through the receiving opening 13 and being engaged by the other of the lower or upper attachment members 15, 14.

Furthermore, the attachment mechanism may comprise a spring 16, for instance a helical spring, provided between the lower attachment member 15 and the carrying plate 6 to permit the solid part 7b to move axially in relation to the handle device 4 and the carrying plate 6. Such a movement may absorb any possible difference in axial growth between the water rods 7.

The solid part 7b is attached to the tube part 7a by means of a coupling 17 which may be formed as an end cap being welded to the tube part 7a. The solid part 7b may be attached to the coupling 17 by means of a screw connection schematically indicated in Fig 3. The outlet 12 may alternatively comprise or consist of one or more openings through the end cap of the coupling 17, as indicated by dotted lines in Fig 3.

A lower end plug 17' may be welded to the lower end of the tube part 7a of each water rod 7. The lower end plug 17' may then be attached to the tie plate 3 by means of a screw joint.

The plurality of spacers 8 comprises a number of primary spacers 8a and one secondary spacer 8b. In the first embodiment, the plurality of spacers 8 comprises only one secondary spacer 8b, but it is possibly to provide more than one secondary spacer 8b, for instance two secondary spacers 8b. The secondary spacer 8b is positioned at the solid part 7b of the respective water rod 7, i.e. above the tube part 7a.

Fig 4 discloses a primary spacer 8a at the four lowest levels. Fig 5 discloses a primary spacer 8a or the secondary spacer 8b, which thus are arranged at the levels above the primary spacers 8a in Fig 4.

The primary spacers 8a are attached to the tube part 7a of the respective water rod 7. The attachment of the primary spacers 8a may be obtained by means of bulges 18 on an outer surface of the tube part 7a of the water rods 7, see Fig 3. Alternatively, the primary spacers 8a may be attached the tube part 7a of the water rods 7 by means of welding.

The tie plate 3, the water rods 7, the primary spacers 8a and the handle device 4 form a support structure carrying the weight of the fuel rods 2 when lifted via the handle 5. Each water rod 7 is designed to carry the weight of the fuel rods 2 when lifted via the handle 5. In such a way redundancy is created in case one or all of the remaining water rods 7 would break.

The outer casing 9 extends over the length of the support structure. The outer casing 9 encloses the support structure and the fuel rods 2. The outer casing 9 has a square cross-sectional shape with four corners.

In the first embodiment, the transition piece 10 is attached to the outer casing 9 by means of countersink screws 19, schematically indicated in Fig 1, extending radially through the outer casing 9 into the transition piece 10. For instance four countersink screws 19, one at each side of the fuel assembly 1.

The support structure rests on the transition piece 10. The support structure with the fuel rods 2 may thus be introduced into and lifted out of the outer casing 9 via the handle 5.

Furthermore, the outer casing 9 comprises two grip apertures 20 provided at the second upper end 1a outside the handle device 4. One of the two grip apertures 20 is indicated in Fig 1. The grip apertures 20 extend through the outer casing 9 at respective one of two diagonally opposite corners of the outer casing 9. The grip apertures 20 are configured to be gripped by means of a gripping tool (not disclosed), which may be designed to grip simultaneously the handle 5 and the grip apertures 20. The fuel assembly 1 may thus be lifted via the handle 5 and the grip apertures 20. This lifting solution illustrated in Fig 1 is sometimes referred to as the "shopping-bag" principle.

At least some of the fuel rods 2 extend through the secondary spacer 8b. Thus the upper end 2b of the at least some of the fuel rods 2 is located above and at a distance from the secondary spacer 8b and below and at a distance from the handle device 4.

The fuel rods 2 comprises full length fuel rods 2 and part length fuel rods 2. The majority of the fuel rods are full length fuel rods 2, whereas a minor part of the fuel rods 2 are part length fuel rods 2. The part length fuel rods 2 may comprises part length fuel rods 2 of different lengths. For instance, 6 to 8 of the fuel rods 2 at the center of the fuel assembly 1, see Figs 2 and 5, and the four fuel rods at the corner of the fuel assembly may be part length fuel rods. The spacers 8a, 8b disclosed in Fig 5 have been adapted to such part length fuel rod. Thus, 12 of the fuel rod positions do not form any primary passages 8' for receiving fuel rods 2, but are instead open for the coolant flow.

The above mentioned at least same fuel rods 2 constitutes full length fuel rods 2. All fuel rods 2 extending through the secondary spacer 8b are thus full length fuel rods 2. As can be seen in Fig 3, the lower attachment member 15 and the spring 16 are provided above and at a distance from the secondary spacer 8b, and from the upper end of the fuel rods 2, especially the full length fuel rods 2.

Each fuel rod 2 comprises a cladding tube 21 enclosing the fuel, in the form of a pile of fuel pellets 22, and a plenum at the upper end 2b above the pile of fuel pellets 22, see Fig 3. A plenum spring 23 is provided in the plenum between an upper end cap 24 and an upper fuel end 25. The plenum spring 23 urges the pile of fuel pellets 22 downwards.

The outer diameter of the fuel rods 2 may be 9 to 10 mm.

The pile of fuel pellets 22 of the full length fuel rods 2 extends from the lower end 2a to the upper fuel end 25. The upper fuel end 25 lies at the level of the upper tube end, as can be seen in Fig 3. Non-boiling coolant, i.e. water in liquid phase, is thus flowing along the whole length of the pile of fuel pellets 22.

The first passages 8' of all of the spacers 8a, 8b engage a respective one of the fuel rods 2 by frictional force. The fuel rods 2 are thus permitted to move axially in the fuel assembly 1 when the frictional force is exceeded. Thus, each fuel rod 2 is held in place by friction and gravity in all of the spacers 8a, 8b through which the fuel rod 2 extends. If the frictional force is exceeded, each fuel rod 2 is permitted to slide axially, and individually, in relation to the other fuel rods 2, the water rods 7, the handle device 4 and the tie plate 3. Consequently, axial growth of the fuel rods 2 is permitted and each fuel rod 2 may to grow independently of the other fuel rods 2 of the fuel assembly 1.

The spacers 8a, 8b comprise cells forming the first passages 8' and the second passages 8", respectively. Each cell forms four abutment lines 27, or elongated abutment areas, see Figs 2 and 3, against the fuel rods 2 extending in the first passages 8', and against the tube part 7a of the water tubes 7 extending in the second passages 8".

The tie plate 3 forms a stop member for the fuel rods 2 in an axial direction. The fuel rods 2 may thus rest against an upper support surface 28 of the tie plate 3, see Fig 1. The lower end 2a of the fuel rods 2 may thus be positioned on or at a distance from the tie plate 3. The lower tie plate 3 ensures that the fuel rods 2 do not fall out of the fuel assembly 1.

The secondary spacer 8b is axially movable in relation to the solid part 7b of the respective water rod 7. The secondary spacer 8b is thus not held by the water rod 7. Instead the secondary spacer 8b is held by frictional force by the full length fuel rods 2 extending through the first passages of the secondary spacer 8b as explained above.

In order to prevent the secondary spacer 8b form moving upwards beyond the upper end 2b of the full length fuel rods 2, a security member 29; 30 is provided.

According to a first variant, the security member 29; 30 comprises one or two projections 29 extending outwardly from the solid part 7b of the water tube 7, see Fig 3.

The projection or projections 29 may for instance be formed through machining of the solid part 7b, by leaving material at a position above the position intended for the secondary spacer 8b. The projections 29 may also be formed by a transversal pin extending transversely through the solid part 7b of the water tube 7.

According to a second variant, the security member 29; 30 comprises a longitudinal pin 30 attached to and extending downwardly from the carrying plate 6 of handle device 4. The longitudinal pin 30 is indicated by dashed lines in Fig 3.

Alternatively, the secondary spacer 8b may be attached to the solid part 7b of the water rods 7, for instance by means of a more restricted secondary passage 8' of the secondary spacer 8b. The secondary spacer 8b may be prevented from moving by beads welded to at least some of the fuel rods 2, i.e. the full length fuel rods 2, or by oversize upper end caps 24 of the fuel rods 2.

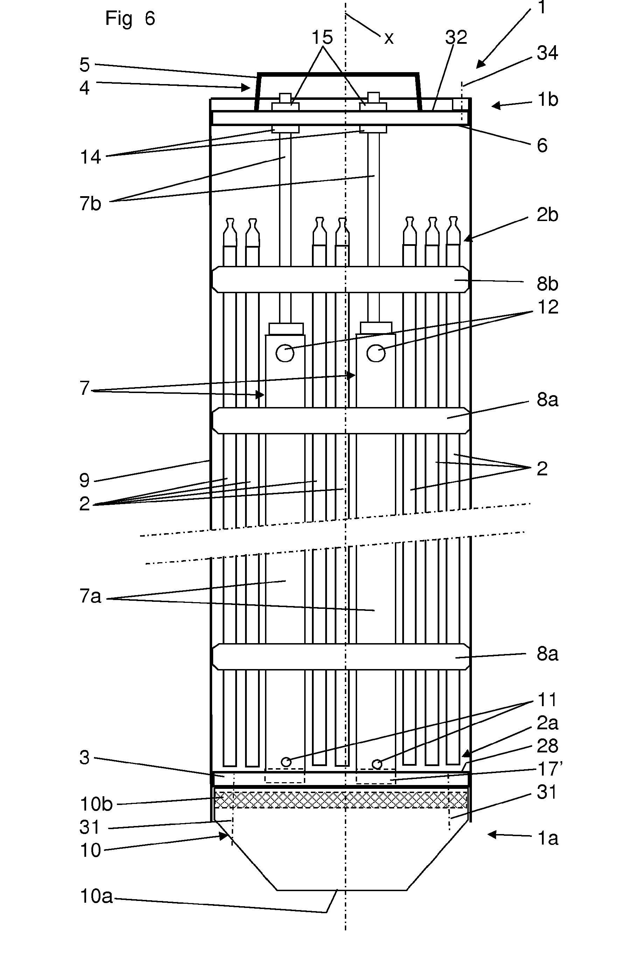

Fig 6 discloses a second embodiment, which differs from the first embodiment in that the transition piece 10 is attached to the tie plate 3 by means of axial screws 31, extending in parallel with the longitudinal axis x through the transition piece 10 into the bottom tie plate 3.

The handle device 4 comprises a support surface 32, which may be provided by the carrying plate 6. The support surface 32 is turned upwards as can be seen in Fig 6. Two clips 33 are attached to the outer casing 9 at two diagonally opposite corners of the outer casing 9 at the second upper end 1a. The two clips 33 are resting on the support surface 32 of the handle device 4 to permit the outer casing 9 to hang on the handle device 4. One of the diagonally opposite clips 33 is disclosed in Fig 6. The fuel assembly 1, i.e. the support structure, the fuel rods 2 and the casing 9, my thus be lifted via the handle 5. This lifting solution illustrated in Fig 6 is sometimes referred to as the "channel-over-top" principle.

Attachment screws 34 are provided to secure the clips 33 and the outer casing 9 on the handle device 4 and the support structure. When the fuel assembly 1 has been lifted out of the reactor, the screws 34 may be removed. The outer casing 9 may then be lifted from the support structure via the clips 33.

The present invention is not limited to the embodiments disclosed above but may be varied and modified within the scope of the following claims.

## Claims

1. A fuel assembly configured for a boiling water reactor, comprising
a first lower end (1 a),
a second upper end (1 b),
a longitudinal axis (x),
elongated fuel rods (2) each having a lower end (2a) and an upper end (2b), and extending in parallel with the longitudinal axis (x), each fuel rod (2) enclosing nuclear fuel,
a tie plate (3) provided at the first lower end (1 a),
a handle device (4) provided at the second upper end (1b) and having a handle (5),
at least two water rods (7) extending in parallel with the longitudinal axis (x) and being attached to the tie plate (3) and to the handle device (4),
a plurality of spacers (8a, 8b), defining first passages (8') through which at least some of the fuel rods (2) extend, and second passages (8") through which the water rods (7) extend, and
an outer casing (9),
wherein each water rod (7) comprises a tube part (7a) attached to the tie plate (3) and extending to an upper tube end, and a solid part (7b) extending from the upper tube end and being attached to the handle device (4),
wherein the tube part (7a) permits a flow of coolant through tube part (7a),
wherein said plurality of spacers (8a, 8b) comprises a number of primary spacers (8a) and a secondary spacer (8b),
wherein the primary spacers (8a) are attached to the tube part (7a) of the respective water rod (7),
wherein the tie plate (3), the water rods (7), the primary spacers (8a) and the handle device (4) form a support structure carrying the weight of the fuel rods (2) when lifted via the handle (5), and wherein the outer casing (9) encloses the support structure and the fuel rods (2),
**characterized in that** the secondary spacer (8b) is positioned at the solid part (7b) of the respective water rod (7).

2. A fuel assembly according to claim 1, wherein the at least some of the fuel rods (2) extend through the secondary spacer (8b) so that the upper end (2b) of the at least some of the fuel rods (2) is located above and at a distance from the secondary spacer (8b) and below and at a distance from the handle device (4).

3. A fuel assembly according to any one of claims 1 and 2, wherein each fuel rod (2) comprises a cladding tube (21) enclosing the fuel and a plenum at the upper end (2b) above the fuel, and wherein the fuel of the at least some fuel rods (2) extends from the lower end (2a) to an upper fuel end (25) which lies at the level of the upper tube end.

4. A fuel assembly according to any one of the preceding claims, wherein the secondary spacer (8b) is axially movable in relation to the solid part (7b) of the respective water rod (7).

5. A fuel assembly according to claim 4, wherein a security member (29; 30) is provided to prevent the secondary spacer (8b) from moving axially beyond the upper end (2b) of the at least some of the fuel rods (2).

6. A fuel assembly according to any one of claims 1 to 3, wherein the secondary spacer (8b) is attached to the solid part (7b) of the water rods (7).

7. A fuel assembly according to any one of the preceding claims, wherein each of the water rods (7) has an overall outer cross-sectional area (A), which is smaller at the solid part (7b) than at the tube part (7a).

8. A fuel assembly according to any one of the preceding claims, wherein the first passages (8') of the spacers (8a, 8b) engage a respective one of the fuel rods (2) by frictional force, thereby permitting the fuel rods (2) to move axially in the fuel assembly (1) when the frictional force is exceeded.

9. A fuel assembly according to claim 8, wherein the tie plate (3) forms a stop member for the fuel rods (2) in an axial direction, by permitting the fuel rods (2) to rest against an upper support surface (28) of the tie plate (3).

10. A fuel assembly according to any one of the preceding claims, wherein the solid part (7b) extends through a respective receiving opening of a carrying plate (6) of the handle device (4) and is attached to the carrying plate (6) by means of an attachment mechanism provided above the secondary spacer.

11. A fuel assembly according to claim 10, wherein the attachment mechanism comprises an upper attachment member (14) above the carrying plate (6) and a lower attachment member (15) below the carrying plate (6).

12. A fuel assembly according to claim 11, wherein the lower attachment member (15) is provided above the upper end of the fuel rods (2).

13. A fuel assembly according to any one of the preceding claims, wherein the fuel assembly comprises a transition piece (10) provided beneath the tie plate (3) and attached to the outer casing (9) and wherein the support structure rest on the transition piece (10) and is permitted to be lifted out of the outer casing (9) via the handle (5).

14. A fuel assembly according to claim 13, wherein the outer casing (9) comprises grip apertures (20) provided at the second upper end (1 a) outside the handle device (4).

15. A fuel assembly according to any one of the preceding claims, wherein the fuel assembly comprises a transition piece (10) provided beneath the tie plate and attached to the tie plate and wherein the handle device comprises a support surface on which the outer casing is hanging to permit lifting of the support structure and the casing via the handle.

16. A fuel assembly according to any one of the preceding claims, wherein the tube part (7a) of each water rod (7) has an inlet (11) having a first flow area and an outlet (12) having a second flow area, wherein the inlet (11) is located at the first lower end (1 a) and the outlet (11) is located at the upper tube end, and wherein the second flow area is larger than the first flow area.
